Europäisches Patentamt

European Patent Office

Office européen des brevets

(19)

(11) Veröffentlichungsnummer : **0 042 466**
**B1**

(12) **EUROPÄISCHE PATENTSCHRIFT**

(45) Veröffentlichungstag der Patentschrift :
01.06.83

(51) Int. Cl.³ : **B 29 F   3/02**

(21) Anmeldenummer : **81101065.1**

(22) Anmeldetag : **16.02.81**

(54) **Temperierbares Gehäuse für einen Doppelschneckenextruder.**

(30) Priorität : **23.06.80 DE 3023393**

(43) Veröffentlichungstag der Anmeldung :
**30.12.81 Patentblatt 81/52**

(45) Bekanntmachung des Hinweises auf die Patenterteilung : **01.06.83 Patentblatt 83/22**

(84) Benannte Vertragsstaaten :
**AT DE FR GB IT NL**

(56) Entgegenhaltungen :
**DE A 2 208 238**
**DE B 2 423 785**
**US A 3 831 665**

(73) Patentinhaber : **HERMANN BERSTORFF Maschinenbau GmbH**
**An der Breiten Wiese 3/5**
**D-3000 Hannover 61 (DE)**

(72) Erfinder : **Brinkmann, Heinz**
**Fichtenweg 8**
**D-3001 Bennigsen (DE)**
Erfinder : **Chszaniecki, Siegfried**
**Ostermannstrasse 5**
**D-3000 Hannover 1 (DE)**

EP 0 042 466 B1

Temperierbares Gehäuse für einen Doppelschneckenextruder

Die Erfindung betrifft ein Schneckengehäuse für einen Doppelschneckenextruder gemäß dem ersten Teil des Anspruchs 1. Ein derartiges Schneckengehäuse ist durch die DE-B-24 23 785 bekannt. Es ist ferner bekannt, zur Verarbeitung von Kunststoffmassen Doppelschneckenextruder anzuwenden, deren innerer Bearbeitungsraum durch Verschleißeinsätze gebildet wird. Die Verschleißeinsätze haben verschleißfeste Innenschichten, um die Lebensdauer des Extruderzylinders zu erhöhen. Um eine Austauschbarkeit der Verschleißeinsätze zu ermöglichen und um die im Betrieb auftretenden Kräfte aufzunehmen, werden diese von einem Trägerkörper umgeben.

Bei der Temperierung derartiger Gehäuse von Doppelschnekkenextrudern tritt die Schwierigkeit auf, eine gute und gleichmäßige Temperierung über den Umfang der Brillenbohrung zu erzielen. Im Zwickelbereich zwischen den beiden Längsbohrungen des Verschleißeinsatzes tritt die größte Wärmedichte auf, während die seitlichen Bereiche der Brillenbohrung einen geringeren Wärmestau aufzeigen.

Es ist auch eine Temperiervorrichtung für derartige Doppelschnekkenextruder bekannt, bei der wendelförmige Außennuten in den Umfang des Verschleißeinsatzes eingebracht worden sind. Nach dem Einschieben in den Trägerkörper entsteht so ein wendelförmiger Temperierkanal. Es hat sich nun herausgestellt, daß die Abdichtung zwischen dem Verschleißeinsatz und dem Trägerkörper problematisch ist. Da das Temperiermedium unter Druck durch die wendelförmigen Temperierkanäle geführt werden muß und eine befriedigende Abdichtung wegen der notwendigen Austauschbarkeit des Verschleißeinsatzes nicht zu finden war, wurde diese bekannte Lösung nur selten eingesetzt (DE-A-20 61 700).

Das Schneckengehäuse gemäß der DE-B-24 23 785 ist mit einem Verschleißeinsatz ausgerüstet, der zwei zueinander parallele Längsbohrungen aufweist. Diese Längsbohrungen bilden eine Brillenbohrung, in der die beiden Extruderschnecken angeordnet sind. Dieser Verschleißeinsatz wird ausschließlich durch konvexe oder durch konvexe und geradlinige Kurven in seinem Außenquerschnitt begrenzt. In den Zwickelbereichen verlaufen die Kurven des Außenquerschnittes ohne Einknickungen. Dadurch soll sich eine genaue Flächenanlage in dem Trägerkörper und damit ein guter Wärmeübergang vom Verschleißeinsatz zum Trägerkörper unter Aufrechterhaltung einer guten Auswechselbarkeit ergeben. Die besondere Form des Außenquerschnittes des Verschleißeinsatzes bedarf einer querschnittsgleichen Ausnehmung im Trägerkörper. Die Herstellung der querschnittsgleichen Ausnehmung im Trägerkörper des Schneckengehäuses ist technisch aufwendig und erfordert einen zweigeteilten Trägerkörper.

Die in dieser Schrift offenbarten axialen Temperierbohrungen sind von den beiden axialen Brillenbohrungen zu weit entfernt, um eine halbwegs zufriedenstellende Temperierung des Zwickelbereiches sicherstellen zu können. Hervorgehoben werden muß, daß bei einer derartigen Konstruktion auch die Einbringung von axialen Bohrungen in der Nähe des Zwickelbereiches nicht durchführbar ist, weil Fixierschrauben 26 zur Festklemmung des Verschleißeinsatzes an dieser Stelle vorgesehen sind.

In der DE-A-22 08 238 wird ein Schneckengehäuse gezeigt, ohne auswechselbaren Einsatz. Wenn derartige Gehäuse, insbesondere die stark gefährdeten Zwickelbereiche, beschädigt sind, muß ein vollständiger und sehr teurer Austausch stattfinden, einschließlich der Flanschverbindungen. Allein aufgrund derartiger Überlegungen bevorzugt der Fachmann stets auswechselbare Einsätze, bei denen auf der anderen Seite Probleme mit der Anordnung axialer Temperierbohrungen so dicht wie möglich an die großen Brillenbohrungen bzw. die Zwickelbereiche heran auftreten, weil die Abstände zwischen den großen Brillenbohrungen und den Außenumfängen der auszuwechselnden Teile gering sein sollen. Je kleiner das auszuwechselnde Teil im Durchmesser ist, um so preiswerter wird der Austausch.

Der Erfindung liegt die Aufgabe zugrunde, ein Gehäuse für einen Doppelschneckenextruder der eingangs beschriebenen Art zu schaffen, das mit einem vergleichsweise geringen technischen Aufwand hergestellt werden kann und dennoch eine einwandfreie Temperierung des Gehäuses ermöglicht.

Diese Aufgabe wird durch die kennzeichnenden Merkmale des Anspruchs 1 gelöst.

Die Kreisform des Verschleißeinsatzes ermöglicht eine fertigungstechnisch leichtere Herstellung des Trägerkörpers. Die querschnittsgleiche, also kreisförmige Ausnehmung im Trägerkörper kann nun ausgebohrt bzw. ausgedreht werden. Eine zweigeteilte Ausführung des Trägerkörpers ist nicht notwendig. Die mechanische Nacharbeit der Außenfläche des kreisförmigen Verschleißeinsatzes, z. B. nach einem Härten der Brillenbohrung, kann auf einfache Weise erfolgen.

Wird der Verschleißeinsatz aus zwei Bimetall-Einsatzkörpern hergestellt, ist nach dem Herstellen der verschleißfesten Innenschicht ein Auftrennen des einzelnen Einsatzkörpers und ein achsparalleles Zusammenschweißen erforderlich. Aufgrund des bei dem Zusammenschweißen auftretenden Verzuges ist ein Nacharbeiten des entstandenen Verschleißeinsatzes notwendig. Diese mechanische Nacharbeit der Außenfläche des kreisförmigen Verschleißeinsatzes kann nun auf einfache Weise nach dem Verschweißen der beiden Einsatzkörper durch Drehen erfolgen.

Die Temperiersysteme in dem Verschleißeinsatz einerseits und in dem Trägerkörper andererseits ermöglichen eine gleichmäßige Temperierung des Schneckengehäuses trotz der unterschiedlichen Abstände zwischen der Brillenbohrungskontur und der Außenfläche des Verschleißeinsatzes. Wärmefehler bei dem zu verarbeitenden Kunststoff fallen somit fort.

In vorteilhafter Ausgestaltung der Erfindung sind der Verschleißeinsatz und der Trägerkörper unabhängig voneinander temperierbar. Die beiden Temperiersysteme des Verschleißeinsatzes können dabei einem Temperaturregelkreis und die beiden Temperiersysteme des Trägerkörpers einem anderen Temperaturregelkreis zugeordnet werden.

Das mäanderförmige Durchfließen der Temperierbohrungen jedes Bohrungssystems ermöglicht das Anschließen einer unterschiedlichen Anzahl von Temperierbohrungen, ohne daß die Einlaß- bzw. Auslaßbohrungen verändert werden müssen.

Anhand der Zeichnung wird nachstehend ein Ausführungsbeispiel der Erfindung näher erläutert. Dabei wurde auf die Darstellung an sich bekannter, zum Verständnis der Erfindung nicht notwendiger Einrichtungen der besseren Übersichtlichkeit halber verzichtet.

Figur 1 zeigt ein aus Trägerkörper und Verschleißeinsatz bestehendes Schneckengehäuse in einem Querschnitt gemäß Linie I-I in Fig. 2.

Figur 2 zeigt das Schneckengehäuse gemäß Fig. 1 in der Draufsicht, wobei der Trägerkörper aufgeschnitten und der Verschleißeinsatz teilweise aufgebrochen dargestellt ist.

Das die hier nicht gezeigte Doppelschnecke auf einem Teil ihrer Länge umschließende Schneckengehäuse weist einen zylinderförmigen Trägerkörper 3 auf, der eine kreisförmige Innenausnehmung 4 hat. In der kreisförmigen Innenausnehmung 4 ist ein eine kreisförmige Außenkontur aufweisender Verschleißeinsatz 5 angeordnet, der zwei parallele Längsbohrungen 6 und 7 aufweist, die sich etwas überschneiden, so daß zwei Zwickelbereiche 8 und 9 entstehen und eine Brillenbohrung 6, 7 gebildet wird. Zur axialen Festlegung ist der Verschleißeinsatz 5 mit einem Absatz 10 größeren Durchmessers versehen, der in einer entsprechenden Ausdrehung im Trägerkörper 3 anliegt.

In jedem Zwickelbereich 8 bzw. 9 des Verschleißeinsatzes 5 sind vier achsparallele Temperierbohrungen 11 bzw. 12 eingebohrt. An den Stirnflächen des Verschleißeinsatzes 5 sind diese achsparallelen Temperierbohrungen 11, 12 durch Stopfen 15 bzw. 14 verschlossen. Über jeweils eine Querbohrung 15 bzw. 16 sind die Temperierbohrungen 11, 12 an ihren Enden miteinander verbunden. Die Querbohrungen 15, 16 sind durch Stopfen 17 bzw. 18 verschlossen. Die Querbohrungen 15, 16 sind zwischen den Temperierbohrungen 11, 12 abwechselnd durch Zwischenstopfen 19, 20 verschlossen, so daß eine mäanderförmige Führung eines durch einen Einlaßkanal 21 eingeführten Temperiermediums bis zu einem Auslaßkanal 22 erfolgen kann. Die radialen Ein- und Auslaßbohrungen 21, 22 eines jeden mäanderförmigen Bohrungssystems stehen über in dem Trägerkörper 3 eingebrachte radiale Bohrungen 23, 24 mit einer hier nicht dargestellten Druckmittelquelle und mit einem Druckmittelrücklauf in Verbindung.

Der den Verschleißeinsatz 5 umgebende Trägerkörper 3 weist an den Seiten der Brillenbohrung 6, 7 des Verschleißeinsatzes 5 axial verlaufende, periphere Temperierbohrungen 25, 26 auf, die ebenfalls mäanderförmig zusammenhängend ausgebildet sind. Über jeweils eine radiale Zuflußbohrung 27, 28 und eine radiale Abflußbohrung 29, 30 können die beiden Temperiersysteme mit dem Temperiermedium beschickt werden.

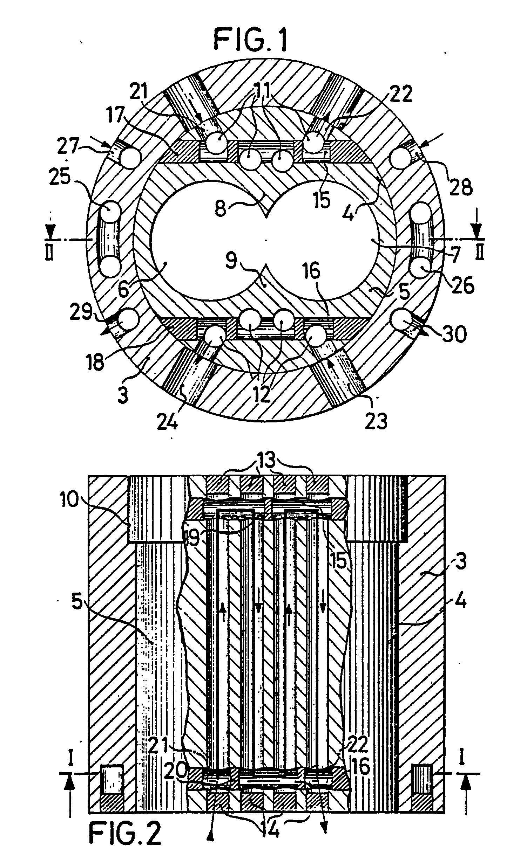

Die beiden in den Zwickelbereichen 8 und 9 des Verschleißeinsatzes 5 angeordneten Temperiersysteme 11 und 12 und die beiden an den Seiten der Brillenbohrung 6, 7 im Trägerkörper 3 angeordneten Temperiersysteme 25, 26 sind, wie besonders aus Fig. 1 ersichtlich ist, etwa in gleichem Abstand von der Bohrungsoberfläche der Brillenbohrung 6, 7 um die gesamte Kontur der Zylinderbohrung herum angeordnet. Daher ist immer eine gleichmäßige Temperierung der den Arbeitsraum darstellenden Brillenbohrung 6, 7 möglich. Die beiden mäanderförmigen Temperiersysteme des Verschleißeinsatzes 5 und die beiden Temperiersysteme des Trägerkörpers 3 können entweder gemeinsam geregelt werden oder separat für sich. Am zweckmäßigsten ist es, die beiden Temperiersysteme des Verschleißeinsatzes 5 einem Temperaturregelkreis zuzuordnen und die beiden Temperiersysteme des Trägerkörpers 3 einem anderen Temperaturregelkreis zuzuordnen.

Bezugszeichenliste

3 = Trägerkörper
4 = Innenausnehmung
5 = Verschleißeinsatz
6 = Längsbohrung
7 = Längsbohrung
8 = Zwickelbereich
9 = Zwickelbereich
10 = Absatz, Verschleißeinsatz
11 = Temperierbohrungen
12 = Temperierbohrungen
13 = Stopfen
14 = Stopfen
15 = Querbohrung
16 = Querbohrung
17 = Stopfen
18 = Stopfen
19 = Zwischenstopfen
20 = Zwischenstopfen
21 = Einlaßbohrung
22 = Auslaßbohrung
23 = radiale Bohrungen
24 = radiale Bohrungen
25 = periphere Temperierbohrungen
26 = periphere Temperierbohrungen
27 = radiale Zuflußbohrung
28 = radiale Zuflußbohrung
29 = radiale Abflußbohrung
30 = radiale Abflußbohrung

## Ansprüche

1. Schneckengehäuse für einen Doppelschneckenextruder zur Verarbeitung von Kunststoff, mit einem einteiligen oder zweiteiligen Verschleißeinsatz (5), der zwei zueinander parallele Längsbohrungen (6, 7) aufweist, die sich unter Bildung einer Brillenbohrung zur Aufnahme der beiden Extruderschnecken überschneiden und mit einem den Verschleißeinsatz (5) umgebenden, die Festigkeitsfunktionen übernehmenden Trägerkörper, der axiale Temperierbohrungen (25, 26) aufweist, dadurch gekennzeichnet, daß der Verschleißeinsatz (5) einen kreisförmigen Außenquerschnitt aufweist, daß der Trägerkörper (3) außen zylinderförmig und mit einer kreisförmigen Innenausnehmung versehen ist, daß in den Zwickelbereichen (8, 9) der Brillenbohrung des Verschleißeinsatzes axiale Temperierbohrungen (11, 12) eingebracht sind und daß die axialen Temperierbohrungen (25, 26) des Trägerkörpers (3) nur an den Seiten der Brillenbohrung (6, 7) gegenüberliegend angeordnet sind.

2. Schneckengehäuse für einen Doppelschneckenextruder nach Anspruch 1, dadurch gekennzeichnet, daß der Verschleißeinsatz (5) und der Trägerkörper (3) unabhängig voneinander temperierbar sind.

3. Schneckengehäuse für einen Doppelschneckenextruder nach Anspruch 1 und 2, dadurch gekennzeichnet, daß die Temperierbohrungen (11, 12, 25, 26) eines jeden Bohrungssystems mäanderförmig durchflossen werden.

## Claims

1. A screw housing for a double screw extruder for processing plastics material, comprising a one-part or two-part wear insert (5) which has two mutually parallel longitudinal bores (6, 7) which intersect, forming a spectacles-shaped bore for accommodating the two extruder screws, and comprising a carrier member which surrounds the wear insert (5) and which performs the strength function and which has axial temperature-control bores (25, 26), characterised in that the wear insert (5) is of circular external cross-section, that the carrier member (3) is of a cylindrical external configuration and is provided with a circular internal recess, that axial temperature-control bores (11, 12) are disposed in the wedge-shaped regions (8, 9) of the spectacles-shaped bore in the wear insert, and that the axial temperature-control bores (25, 26) in the carrier member (3) are arranged at opposite positions only at the sides of the spectacles-shaped bore (6, 7).

2. A screw housing for a double screw extruder according to claim 1 characterised in that the wear insert (5) and the carrier member (3) can be temperature-controlled independently of each other.

3. A screw housing for a double screw extruder according to claim 1 and claim 2 characterised in that the temperature-control bores (11, 12, 25, 26) of each bore system define a labyrinth-type flow path.

## Revendications

1. Fourreau de vis pour extrudeuse à vis double destiné à la transformation de matière plastique, comprenant une pièce d'usure rapportée (5) en une partie ou en deux parties présentant deux alésages longitudinaux (6, 7) parallèles entre eux, qui se chevauchent en formant un alésage en lunettes pour la réception des deux vis de l'extrudeuse, et un corps-support qui entoure la pièce d'usure rapportée (5), qui prend en charge les fonctions de résistance mécanique et qui présente des perçages axiaux (25, 26) de modération de la température, caractérisé en ce que, la pièce d'usure rapportée (5) présente une section transversale extérieure circulaire, le corps-support (3) est cylindrique extérieurement et est muni d'un creux intérieur circulaire, des perçages axiaux de modération de la température (11, 12) sont ménagés dans les régions cunéiformes (8, 9) de l'alésage en lunettes de la pièce d'usure rapportée et les perçages axiaux de modération de la température (25, 26) du corps-support (3) ne sont disposés l'un en face de l'autre que sur les côtés de l'alésage en lunettes (6, 7).

2. Fourreau de vis pour une extrudeuse à vis double suivant la revendication 1, caractérisé en ce que la pièce d'usure rapportée (5) et le corps-support (3) peuvent être modérés en température indépendamment l'un de l'autre.

3. Fourreau à vis pour une extrudeuse à vis double suivant la revendication 1 ou 2, caractérisé en ce que les perçages de modération de la température (11, 12, 25, 26) de l'un de chaque système de perçage sont parcourus suivant une forme en méandre.

# FIG.1

# FIG.2